(19) Europäisches Patentamt

European Patent Office

Office européen des brevets

(11) EP 1 394 677 A2

(12) **EUROPEAN PATENT APPLICATION**

(43) Date of publication:
03.03.2004 Bulletin 2004/10

(51) Int Cl.$^7$: **G06F 9/45**

(21) Application number: 03255374.5

(22) Date of filing: 29.08.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **29.08.2002 US 407040 P**
**05.02.2003 US 359329**

(71) Applicant: **Anadigm, Inc.**
**Tempe, Arizona 85284 (US)**

(72) Inventor: **Schene, Christopher Robin**
**Phoenix Arizona 85032 (US)**

(74) Representative: **Lambert, Ian Robert et al**
**Lloyd Wise, McNeight & Lawrence,**
**Highbank House**
**Exchange Street**
**Stockport, Cheshire SK3 0ET (GB)**

(54) **Generation of compiled code for speeding up a simulator**

(57) A method comprising providing an interpretable coded algorithm; providing an executable coded algorithm; determining whether the interpretable coded algorithm is functionally equivalent to the executable coded algorithm; and selectively performing one of interpreting the interpretable coded algorithm and executing the executable coded algorithm.

FIG. 1

**Description**

CROSS-REFERENCE TO RELATED APPLICATION

This application claims priority in U.S. Provisional Patent Application Serial No. 60/407,040, which was filed on August 29, 2002, and which is incorporated by reference herein.

TECHNICAL FIELD

The invention relates to computer design software tools that include interpretable coded algorithms. The invention also relates to software interpreters and compilers, and modules in computer aided design software suites and containing coded algorithms.

BACKGROUND OF THE INVENTION

Software interpreters are known in the art. An interpreted program or script is a program whose instructions comprise a logically sequenced set of operating system commands. The commands are handled one at a time by a command interpreter. The interpreter sends requests to the operating system. This is in contrast to a compiled program, which is much more efficient.

A compiler processes software statements written in a programming language and converts them into machine language that a computer's processor uses. A human computer programmer creates a file of a plurality of lines of statements, in a computer language such as C, using an editor program. This code is called source code. A compiler converts source code into something close to the strings of 1s and 0s that are given to a microprocessor. This is done by analyzing ("parsing") the statements syntactical one after the other in one or more stages or passes to build the output code. The compiler also makes sure that statements that refer to other statements are referred to correctly in the final code. The output code is typically called object code or an object module. The work in converting to machine language has already been done before a compiled program has run. Therefore, compiled programs run much more quickly.

In some operating systems, an additional step is required after compilation, called linkage editing, which produces a "load module." Linkage editing resolves the relative locations of instructions and data where more than one object module runs at the same time and cross-references each others instructions or data.

The Java programming language is an object oriented language. Java has introduced the possibility of compiling output ("bytecode") that can run on any computer system for which a bytecode interpreter is provided. The bytecode interpreter is called a Java virtual machine. Thus, bytecode is processed by a program rather than by the hardware processor. Java bytecode is therefore platform independent code. The virtual machine converts each generalized machine instruction into a specific machine instruction for use by the processor. In the past, computer languages required a separate compiler for each computer platform (e.g., Intel™, Apple™, etc). More particularly, in the past most programs written in any particular language had to be recompiled and sometimes rewritten for different computer platforms. An advantage of a language such as Java, that comes with a virtual machine for each platform, is that source language statements need to be compiled only once and will then run on substantially any platform. However, the virtual machine handles one bytecode instruction at a time. Rather than being interpreted one instruction at a time, Java bytecode can optionally be recompiled at each particular system platform, by a "just-in-time compiler." Microsoft.Net has a Just in Time compiler as well.

A just-in-time compiler is really a second compiler. The just-in-time compiler converts Java bytecode into instructions that can be sent directly to a processor. The Java just-in-time compiler compiles bytecode into system-specific code, as though the program had been compiled initially for that platform. After code has been recompiled by the just-in-time compiler, it will usually run more quickly. The just-in-time compiler comes with the virtual machine and is used optionally. The just-in-time compiler compiles the bytecode into platform-specific executable code that can be immediately executed. It is usually faster to select the option to use the just-in-time compiler, particularly if the method executable is repeatedly reused. One commercially available interpreter is known as the IntelliSense™ interpreter.

In the past, designers have had a choice of providing either compiled or interpreted code. The choice is made at build time and is fixed at construction (system build time). Attention is directed to Interpreted Basic, Microsoft™ .net technology, Microsoft™ Visual Studio, p-code, Java, Labview, Simulink; and Mathcad.

SUMMARY OF THE INVENTION

One aspect of the invention provides a method and apparatus which chooses, at runtime, faster compiled code if and only if functionally equivalent to interpretable code. If not functionally equivalent, slower interpreted code is used.

Another aspect of the invention provides a method comprising providing at least one module containing a plurality of interpretable coded algorithms; producing compilable coded algorithms from the interpretable coded algorithms; producing comparison ready algorithm code from the interpretable coded algorithms, the comparison ready algorithm code providing for comparison of compilable coded algorithms to interpretable coded algorithms; producing a chooser engine configured to functionally compare interpretable coded algorithms to compilable coded algorithms; producing a linkage between the compilable coded algorithms and the comparison ready algorithm code to associate the results of the functional comparison with compiled coded algorithms; and producing compiled coded algorithms from the compilable coded algorithms.

Another aspect of the invention provides a method comprising providing an interpretable coded algorithm; providing an executable coded algorithm; determining whether the interpretable coded algorithm is functionally equivalent to the executable coded algorithm; and selectively performing one of interpreting the interpretable coded algorithm and executing the executable coded algorithm.

Another aspect of the invention provides a method comprising providing an interpretable coded algorithm; providing a plurality of executable coded algorithms; determining, in a computer aided design tool for designing an industrial control process, whether the interpretable coded algorithm is functionally equivalent to the executable coded algorithm; unconditionally using the executable coded algorithm if the interpretable coded algorithm is, under all circumstances, functionally equivalent to the executable coded algorithm; and unconditionally interpreting the interpretable coded algorithm if the interpretable coded algorithm is never functionally equivalent to the executable coded algorithm.

Yet another aspect of the invention provides a method comprising providing an interpretable coded algorithm; providing a plurality of executable coded algorithms; determining, in a computer aided design tool for designing electrical circuits, whether the interpretable coded algorithm is functionally equivalent to the executable coded algorithm; unconditionally using the executable coded algorithm if the interpretable coded algorithm is, under all circumstances, functionally equivalent to the executable coded algorithm; and unconditionally interpreting the interpretable coded algorithm if the interpretable coded algorithm is never functionally equivalent to the executable coded algorithm.

Another aspect of the invention provides a system comprising at least one module containing a plurality of interpretable coded algorithms; means for producing compilable coded algorithms from the interpretable coded algorithms; means for producing comparison ready algorithm code from the interpretable coded algorithms, the comparison ready algorithm code providing for comparison of compilable coded algorithms to interpretable coded algorithms; a chooser engine configured to functionally compare interpretable coded algorithms to compilable coded algorithms; means for producing a linkage between the compilable coded algorithms and the comparison ready algorithm code to associate the results of the functional comparison with compiled coded algorithms; and means for producing compiled coded algorithms from the compilable coded algorithms.

Another aspect of the invention provides a system comprising an interpretable coded algorithm; providing an executable coded algorithm; determining whether the interpretable coded algorithm is functionally equivalent to the executable coded algorithm; and selectively performing one of interpreting the interpretable coded algorithm and executing the executable coded algorithm.

Another aspect of the invention provides a system comprising: an interpretable coded algorithm; a plurality of executable coded algorithms; a computer aided design tool for designing an industrial control process and configured to: determine whether the interpretable coded algorithm is functionally equivalent to the executable coded algorithm; unconditionally use the executable coded algorithm if the interpretable coded algorithm is, under all circumstances, functionally equivalent to the executable coded algorithm; and unconditionally interpret the interpretable coded algorithm if the interpretable coded algorithm is never functionally equivalent to the executable coded algorithm.

Another aspect of the invention provides a system comprising an interpretable coded algorithm; a plurality of executable coded algorithms; a computer aided design tool for designing electrical circuits and configured to: determine whether the interpretable coded algorithm is functionally equivalent to the executable coded algorithm; unconditionally use the executable coded algorithm if the interpretable coded algorithm is, under all circumstances, functionally equivalent to the executable coded algorithm; and unconditionally interpret the interpretable coded algorithm if the interpretable coded algorithm is never functionally equivalent to the executable coded algorithm.

BRIEF DESCRIPTION OF THE DRAWINGS

Preferred embodiments of the invention are described below with reference to the following accompanying drawings.

Fig. 1 is a functional block diagram illustrating extracting and building of compilable code from a module including interpretable coded algorithms.

Fig. 2 is a functional block diagram illustrating runtime compare and chooser functions that take place after performing the functions of Fig. 1.

Fig. 3 is a flowchart illustrating logic flow employed by the composite chooser engine of Fig. 2, in one specific embodiment.

Fig. 4 is a flowchart illustrating logic flow employed by the conditional chooser engine of Fig. 2, in one specific embodiment.

Fig. 5 is a flowchart of steps performed by the chooser engine, in one embodiment, to determine whether to use pre-compiled code or interpreted code.

Fig. 6 is a flowchart of steps performed to build a look-up-table (LUT).

Fig. 7 is a functional block diagram illustrating use of a method and apparatus in accordance with the invention in a process control CAD tool, in accordance with one embodiment.

Fig. 8 is a functional block diagram illustrating a configurable analog module used with a design and simulation tool for designing a field programmable analog array.

Fig. 9 is a functional block diagram illustrating extracting and building of compilable code from a configurable analog module of the type shown in Fig. 8.

Fig. 10 is a functional block diagram illustrating runtime compare and chooser functions that take place after performing the functions of Fig. 9.

Fig. 11 is an example of a circuit design tool screen showing a dialog box indicating what code was interpreted and what code was compiled.

DETAILED DESCRIPTION OF THE PREFERRED EMBODIMENTS

This disclosure of the invention is submitted in furtherance of the constitutional purposes of the U.S. Patent Laws "to promote the progress of science and useful arts" (Article 1, Section 8).

One aspect of the invention provides a method and apparatus which chooses, at runtime, faster compiled code if and only if functionally equivalent to interpretable code. If not functionally equivalent, slower interpreted code is used. The invention provides the designer with the flexibility of being able to change coded algorithms without the supplier of the design tool having to rebuild or reconstruct the design tool. The designer has the advantage of fast, compiled code where functional equivalence exists relative to existing compiled code. If there is no functionally equivalent compiled code, the designer's code can still be interpreted. The designer can also change coded algorithms without incurring the expense or overhead of a software development environment.

Attention is directed towards commonly assigned U.S. Patent Application Serial No. 10/171,334 (Attorney Docket No. AN21-001), filed June 11, 2002, titled "System and Method for Configuring Analog Elements in a Configurable Hardware Device", naming as inventors Danny Austin Bersch, Ian Craig Macbeth, Howard C. Anderson, Brian Eugene Nottingham, Troy Franklin Giles, and Timothy James Streit, and which is incorporated herein by reference. Attention is also directed to the Appendix attached hereto, which Appendix contains a copy of the source code submitted with US Patent Application No. 10/171,334.

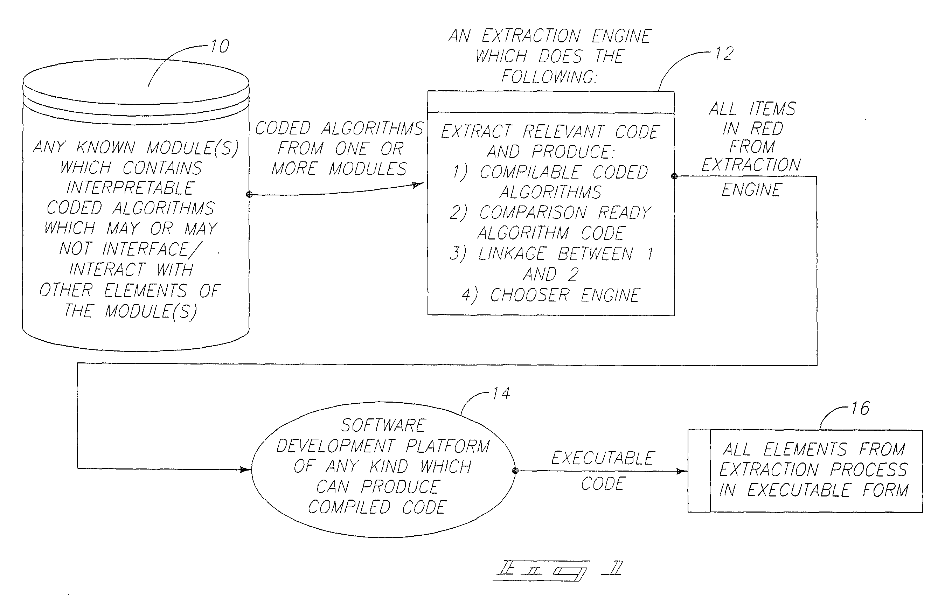

Fig. 1 is a functional block diagram illustrating extracting and building of compilable code from a module including interpretable coded algorithms. A coded algorithm is an algorithm expressed in some computer language, known or unknown. Computer languages include C, C++, visual basic, Java, Perl, Pascal, Simulink, Mathlab, etc. Fig. 1 shows a module 10 including interpretable code. More particularly, in the illustrated embodiment, the module 10 includes interpretable coded algorithms that may or may not interface or interact with other elements in the module. An interpretable coded algorithm is a coded algorithm (e.g., in module 10) combined with interface information so that it can be executed by an interpreter. Interpretable coded algorithms may or may not have memory or retained state information from execution to execution. In one embodiment, an interpretable coded algorithm is a module's coded algorithm with additional formatting and interface information necessary for execution by an interpreter.

In one embodiment, the module 10 is an interchangeable component of a computer design software suite of any kind that contains interpretable coded algorithms. For example, such a software tool is Matlab Simulink ™ available from The MathWorks, Inc., 3 Apple Hill Drive, Natick, MA 01760. Another such tool is AnadigmDesigner (and versions thereof) available from Anadigm, Ltd., 3-5 Mallard Court, Mallard Way, Crewe Business Park, Crewe, United Kingdom, CW1 6QZ.

Coded algorithms from the module 10 (or from additional modules 10) are transferred to an extraction engine 12. In computer programming, engine is a jargon term for a program that performs a function for other programs. An engine can be central or focal program in an operating system, subsystem, or application program that coordinates the overall operation of other programs. It is also used to describe a special-purpose program containing an algorithm that can sometimes be changed. The best known usage is the term search engine which uses an algorithm to search an index of topics given a search argument.

The coded algorithms may or may not receive input from the software design tool (e.g. Simulink, Anadigm-Designer, or others) or from the module. The extraction engine 12 extracts relevant code and produces compilable coded algorithms, comparison ready algorithm code, a linkage between the compilable coded algorithms and comparison ready algorithm code, and a chooser engine (which will be described below in greater detail).

Compilable coded algorithms are interpretable coded algorithms that are capable of being translated into object code by a compiler of any kind (known or unknown). These compilable coded algorithms are "functionally equivalent" to the interpretable coded algorithms. The compilable coded algorithms may or may not require translation from the interpretable coded algorithm form to the compilable coded algorithm form. The compilable coded algorithms may or may not have "memory" or retained state information from execution to execution. Compilable coded algorithms are in comparison to compiled coded algorithms, which are compilable coded algorithms that have already been translated to object code by a compiler.

Creation of the compilable coded algorithms by the extraction engine 12 may involve translation of the code, and addition of interface information to interface to the compilable coded algorithms.

The comparison ready algorithm code is a translation of an interpretable coded algorithm into a data form that allows fast comparison of compilable coded algorithms and interpretable coded algorithms. This comparison may include, but is not limited to, any of the following: checksums, a decision tree, a sorted list, hash tables (look-up tables), binary trees, etc.

The compilable coded algorithms, comparison ready algorithm code, a linkage between the compilable coded algorithms and comparison ready algorithm code, and chooser engine are used by a software development platform 14. The software development platform 14 is any kind that can produce compiled code. The software development platform 14 produces executable code 16. All elements from the extraction process become available in executable form. The executable code 16 may include one or more separate, independent, executable files. Examples of executable code include, for example, com, .exe, .dll, .ld, and .ocx type files. The extraction process is generic and is not limited to any particular target computer language.

The linkage between the compilable coded algorithms and the comparison ready algorithm code provides the ability to associate the results of a chooser (described below) with the correct set of compiled coded algorithms.

Fig. 2 is a functional block diagram illustrating runtime compare and chooser functions that take place after performing the functions of Fig. 1. Fig. 2 shows one or more modules 18. Each module 18 is any known or unknown module which contains coded algorithms that can be interpreted. The coded algorithms may or may not interface or interact with other elements of the module. A module collection 20 is selected from each module 18. The module collection 20 is different from the modules 10 because the modules in the execution may or may not be modules which were known at the time that the compilable coded algorithms were created. It is still possible at run time to find one or more compilable coded algorithms that are functionally equivalent to a given module coded algorithm which was unknown at the time that the compilable coded algorithms were constructed. The term "functionally equivalent" will be described in greater detail below.

In block 22, interpretable coded algorithms are extracted from the modules 20 and/or 18. The extracted interpretable coded algorithms are made available to a composite chooser engine or chooser 26, so that the composite chooser engine 26 can use the interpretable coded algorithms along with all elements 16 from the extraction process to determine if a "functionally equivalent" compilable coded algorithm exists to match one or more of the module coded algorithms.

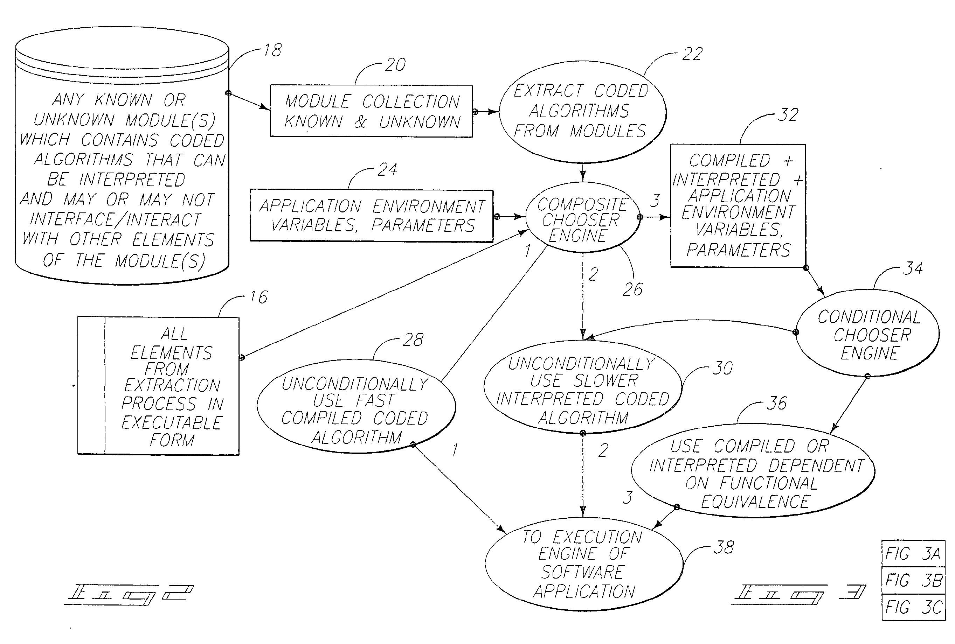

In block 26, the composite chooser engine makes a choice between paths 1, 2, and 3; leading to blocks 28, 30, and 32, using logic that will be described in greater detail below with regard to Fig. 3. The composite chooser engine 26 makes its choice based on the extracted coded algorithms 22, the executable elements 16, and application environment variables and parameters 24. The application environment variables and parameters are the current, dynamic contents of various variables and parameters that are passed to the module coded algorithms or compilable coded algorithms. These could include, but are not limited to, time, gain, or mathematical information.

If path 1 is selected by the chooser engine 26, the relatively faster, compiled coded algorithm is unconditionally used. This path is taken when, under all circumstances, a compilable coded algorithm has been found which is "functionally equivalent" to a given module coded algorithm. An identifier of the functionally equivalent compilable coded algorithm is sent to the execution engine 38. Because the functional equivalence is unconditional, the chooser engine 26 needs to only be called once for this module coded algorithm.

If path 2 is selected, a (generally) relatively slower, interpreted coded algorithm is used unconditionally in block 30. Path 2 is taken when, under all circumstances, a compilable coded algorithm cannot be identified which is "functionally equivalent" to a given module coded algorithm. An identifier indicating that the interpretable coded algorithm should be run is sent to the execution engine 38. Because "functionally equivalent" is never true, the chooser engine 26 need only be called once for this module coded algorithm.

If path 3 is selected, compiled and interpreted coded algorithms and application environment variables and parameters are handled by a conditional chooser engine 34. Path 3 is taken when at least one compilable coded algorithm has been identified which is functionally equivalent to a given module coded algorithm, but that functional equivalence is dependent on which code paths and variables are accessed. The code paths and variables accessed, in turn, are dependent on the values of the application environment variables and parameters which may or may not be passed to the compilable coded algorithms and interpretable coded algorithms. Because this is conditional, for path 3 the chooser engine 26 must be called for each desired execution of the module coded algorithm, and the chooser engine 26 will indicate for each iteration whether to use the (generally) faster compiled coded algorithm or slower interpreted coded algorithm code in block 36. In one embodiment, the conditional chooser engine 34 is part of the composite chooser engine 26.

Paths 1, 2, and 3 all lead to an execution engine 38. An identifier (e.g., an integer or ASCII character string) for the compilable coded algorithm is returned from the chooser engine 26 through paths 1, 2 or 3. If no compilable coded algorithm is found to be functionally equivalent, then the compilable coded algorithm identifier returned is "NULL", and this indicates that an interpreted coded algorithm should be run for this module coded algorithm.

Fig. 3 is a flowchart illustrating logic flow used by the composite chooser engine of Fig. 2, in one specific embodiment. Other embodiments are possible. Application environment variables and parameters 24; coded algorithms 42 extracted from a module, also known as interpreted coded algorithms; and all elements 16 from the extraction process are used in a decision block 44.

In decision block 44, a determination is made as to whether the coded algorithms have been previously determined to have a conditionally functionally equivalent available. If so, path 3 is taken (Fig. 2), in block 46, and all input data is passed to the conditional chooser engine in block 46. If not, the process flows to block 48.

In block 48, a determination is made as to whether the interpretable coded algorithm is syntactically identical, with the exception of wide space and comments, to one or more compilable coded algorithms. If so, path 1 is taken, in block 50, and an identifier is returned for the compilable coded algorithm to execute. There is no need to call the chooser engine again because the compilable coded algorithm is always equivalent. If not, syntactically identical, the process flow continues to block 52.

In block 52, a determination is made as to whether this interpretable coded algorithm differs from at least one compilable coded algorithm only in 1) the addition of variables which are never accessed or read, or 2) a change only of name for one or more existing variables and every place each variable is accessed, or both 1) and 2). If true, process flow continues to block 50, described above. If not, process flow continues to block 54.

In block 54, a determination is made as to whether the interpretable coded algorithm differs from one or more compilable coded algorithms only in decision path code. For example, conditional code which is added to the module coded algorithm. If so, the process flow continues to block 56, where path 3 (see Fig. 2) is taken, and all input data is passed to the conditional chooser engine. If not, process flow continues to block 58. In block 58, path 2 (see Fig. 2) is followed because no compilable coded algorithm can be found which matches the module coded algorithm. There is no need to call the chooser engine again, since no matching compilable coded algorithm is available. The interpretable coded algorithm will always be run for this module coded algorithm.

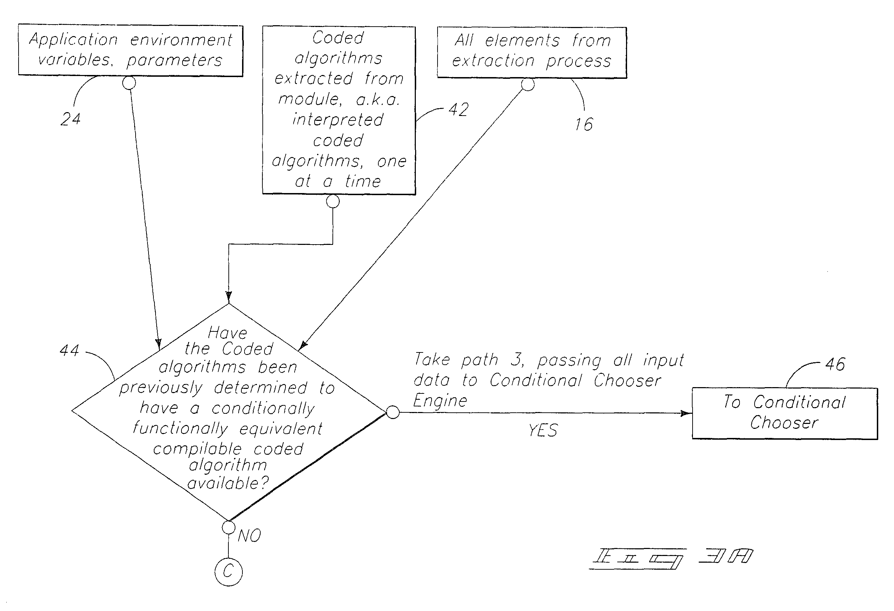

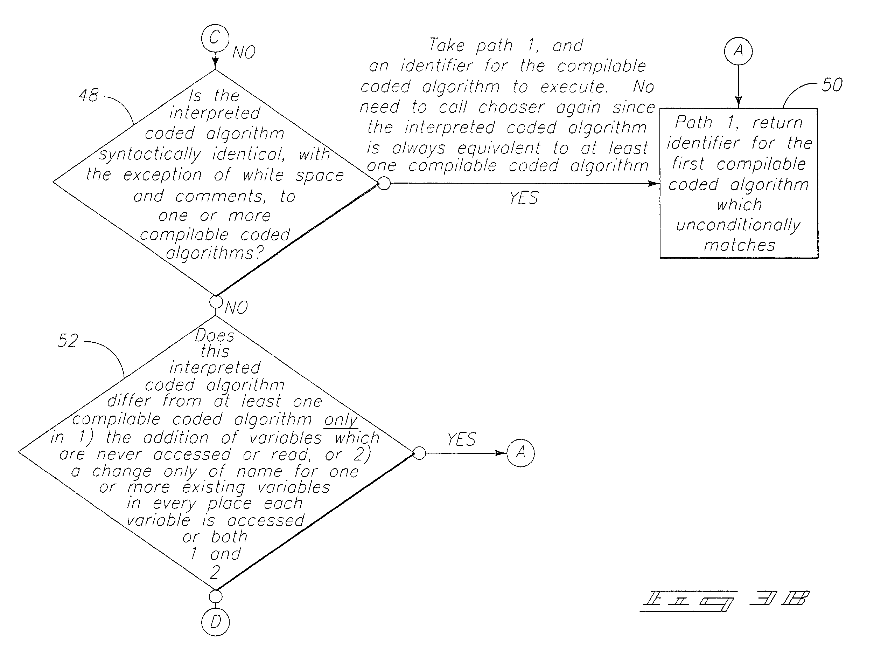

Fig. 4 is a flow chart illustrating logic flow employed by the conditional chooser engine of Fig. 2, in one specific embodiment.

Application environment variables and parameters 24; coded algorithms 42 extracted from module, also known as interpreted coded algorithms; and all elements 16 from the extraction process are used by decision block 60. In block 60, a decision is made as to whether a condition decision data structure (hash table, lookup table or other decision data structure, for example) has already been built for this interpretable coded algorithm. If so, process flow continues to block 62; if not, process flow continues to block 64.

In block 62, application environment variables, parameters, and conditional decision data structure information (hash table, lookup table or other) are used to determine if there is a matching compilable coded algorithm for this combination of variables. If so, in block 70, an identifier of the matching compilable coded algorithm is returned for execution of that compilable coded algorithm. If not, in block 68, an interpretable coded algorithm is run for this pass.

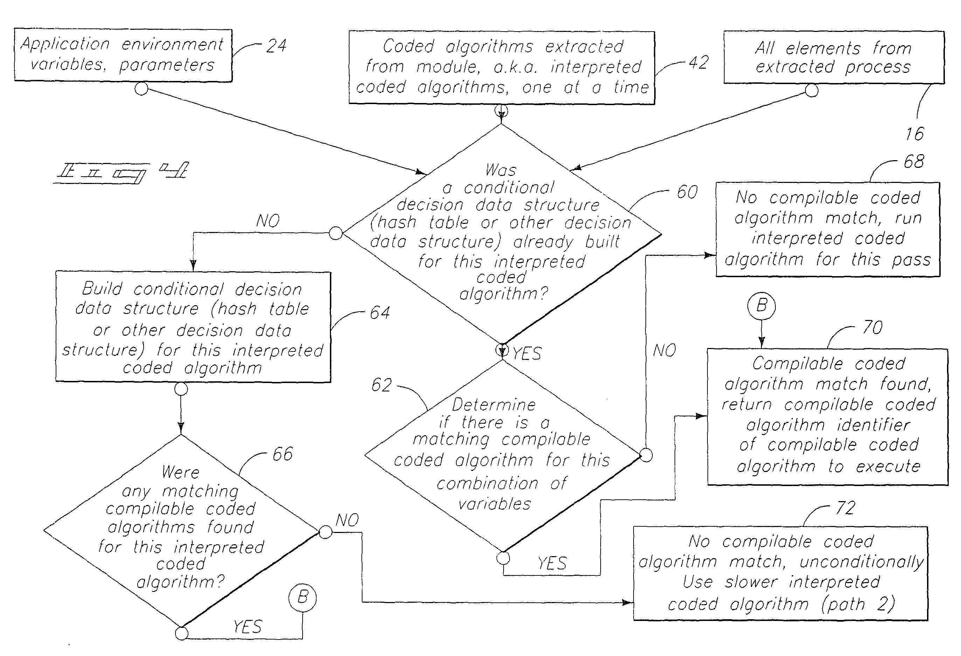

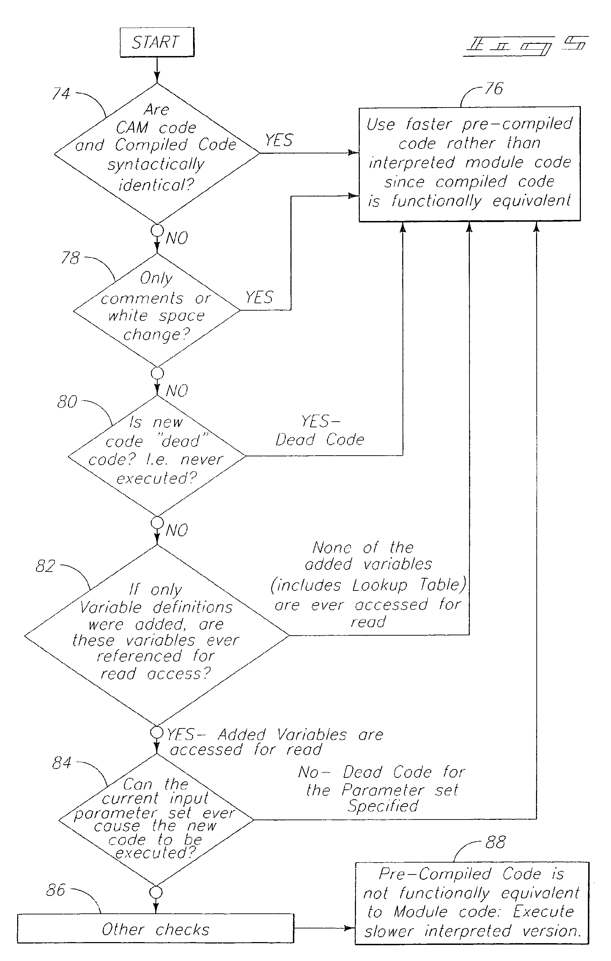

In block 64, a conditional decision data structure (hash table or lookup table) is built for this interpretable coded algorithm (see Fig. 6 for an example of how a hash table or lookup table is built). After block 64, process flow continues to block 66.

In block 66, a determination is made as to whether any matching compilable coded algorithms were found for this interpretable coded algorithm. If not, similar interpreted coded algorithms are unconditionally used in block 72 (see block 30 of Fig. 2). If a matching compilable coded algorithm was found for this interpretable coded algorithm, process flow continues to block 70 (described above).

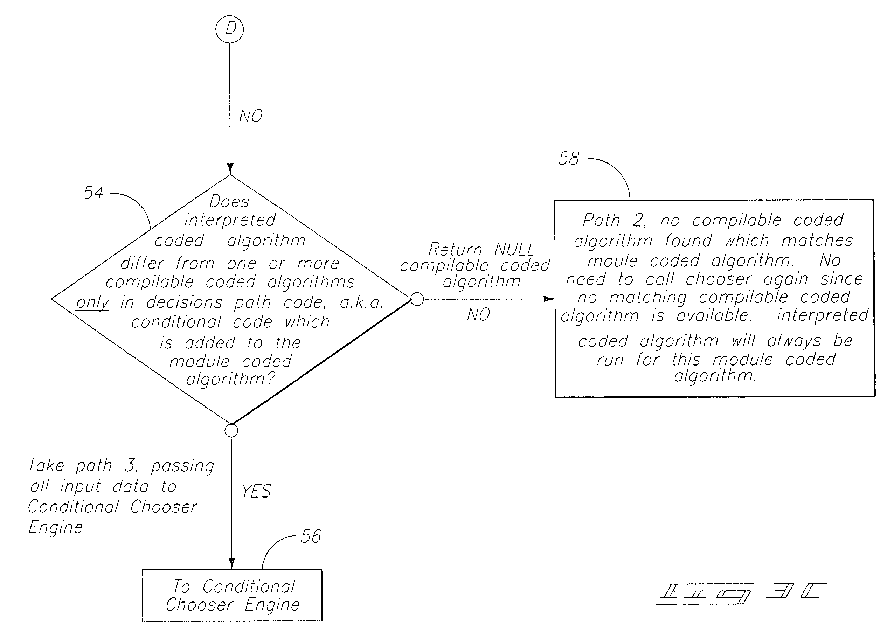

Fig. 5 is a flowchart of steps performed, in one embodiment, to compare pre-compiled code with interpreted code and determine "functional equivalence."

In block 74, a determination is made as to whether module code and compiled code are syntactically identical. If so, process flow proceeds to block 76; if not, process flow proceeds to block 78.

In block 76, precompiled code rather than interpreted code is used because the compiled code is functionally equivalent.

In block 78, a determination is made as to whether the only differences are comments or white space changes.

If yes, those are the only differences, process flow then proceeds to block 76. If not, process flow proceeds to block 80.

In block 80, a determination as to whether new code is "dead" code; i.e., code that is never executed. If the different (e.g., new or additional) code is "dead" code, process flow proceeds to block 76; if not, process flow proceeds to block 82.

In block 82, if only variable definitions were added, a determination is made as to whether these variables are ever referenced for read access. If not (none of the new variables are ever accessed for read), process flow proceeds to block 76; if yes, the new variables are accessed for read, process flow proceeds to block 84.

In block 84, a determination is made as to whether the current input parameter set can ever cause the new code to be executed. ("New code" is code that is in the interpretable module code but not in the compilable code). If so, process flow proceeds to block 86; if not, the code is "dead" code for the parameter set specified, and process flow proceeds to block 76.

In block 86, other checks, as desired, may be performed. After block 86 is performed, if the code is not functionally equivalent, process flow proceeds to block 88.

If block 88 is reached, precompiled code is not functionally equivalent to interpretable coded algorithms in the modules 18 and 20. The slower interpreted version is executed.

Thus, in one embodiment, one or more coded algorithms, interpreted or compiled, are said to be functionally equivalent if for a given computing environment and for a given operational context and operating environment for a given set of input variables, the coded algorithms produce a result that is equivalent as defined by the specific operation requirements of the computer program, suite or operation environment in question. Examples are as follows:

Example 1: a coded algorithm in simulink produces a mathematical result for an equation, running interpreted code (A+B), and ignores any significant figures beyond 8. A compiled coded algorithm produces mathematical result for the same equation to 18 significant digits, but always agrees on the first 8. The algorithms are "functionally equivalent" for the environment in question. In this particular case, the compilable coded algorithm is unconditionally functionally equivalent because the first 8 significant figures are identical for both algorithms.

Example 2: the same coded algorithm in simulink is changed by adding a conditional statement which multiples the result by 2 if A or B is greater than 5, as follows:

```
Result = A + B;
    if ((A > 5) | (B > 5))
            result = result * 2;
    end
```

The previous compilable coded algorithm used to state:

$$Result = A + B;$$

The compilable coded algorithm is conditionally functionally equivalent to the interpreted code for all cases where A & B are both less than 5.

Example 3: an engineer is working with a simulated version of code, and adds a new variable to the system. This variable is, however, never accessed. The existing faster compiled code is still functionally equivalent because the new interpreted variable is never used and therefore has no effect.

Example 4: an engineer is working on simulated "C" code and doubles the size of a look up table in the simulated code from 10 entries to 100 entries, while the faster compiled version has 10 look up table entries. If it is determined that no combination of values, execution paths and states can actually cause access to the new upper 90 entries of the look up table to be accessed, the compiled code and simulated are still "functionally" equivalent and therefore the faster compiled version will still be run.

Example 5: an engineer changes the name of an integer variable in simulated "C" code from "k" to "lookup_table_index" to make the variable name more meaningful to a reader of the code. The code is analyzed and a determination is made that the variable "lookup_table_index" is merely a replacement of the variable "k", and does not in anyway change the operation of the code. Because the code is determined to be "functionally" equivalent to the compiled "C", the faster compiled version will be run resulting in performance improvement.

Also consider the following example "C" code:

```
int example_subroutine (int a) {
        int k = 1;
        if (a > 10) {
                //DPathA
                k = 11;
        }
        if (a > 50) {
                //DPathB
                k = 50;
        }
        if (a  <=  50)
        {
                //DPathC
                k = 30;
        }
        return k;
}
```

For this code, there are the following possible combinations
for a > 50 DPath A and DPathB are executed
for a > 10 and a <= 50 DPathA and DPathC are executed
for a <= 10 and DPathC is executed
One of the rules that is to be followed by the chooser engine is that the input variables cannot be changed in the code, because they are used to determine functional equivalence. If a change to an input variable is detected in the code, the conditional functional equivalence cannot be evaluated.
Therefore, for each one of these three paths, an evaluation is performed for a separate piece of code. That is, the interpretable coded algorithm is actually changed three times in one embodiment so that it becomes the following three algorithms or code snippits
For a > 50 DPathA and DPathB are executed:

```
int k = 1;
if (a > 10) {
        //DPathA
        k = 11;
}
if (a > 50) {
        //DPathB
        k = 50;
}
return k;
}
```

For a > 10 and a < = 50 DPathA and DPathC are executed:

```
int example_subroutine (int a) {
        int k = 1;
        if (a > 10) {
                //DPathA
                k = 11;
        }
        if (a <= 50)
        {
                //DPathC
                k = 30;
        }
        return k;
}
```

or, this could also be reduced to

```
int example_subroutine (int a) {
        int k = 1;
        k = 11;
        k = 30;
        return k;
}
```

and achieve the same "functionally equivalent" results

For a <= 10, DPathC is executed:

```
int example_subroutine (int a) {
int k = 1;
if ( a <= 50)
{
        //DPathC
        k = 30;
}
return k;
}
```

The code could be even further reduced in other embodiments

Fig. 6 is a flowchart of steps performed to build a look-up-table (LUT). In block 90, a loop is initiated for which first level decision path in an interpretable coded algorithm.

In block 92, a determination is made as whether or not execution of this decision path is controlled by input variables and if that relationship can be identified. Block 90 is repeated for all first level decision paths.

In block 94, all possible combinations of decision paths are determined. For each combination, an altered piece of interpretable coded algorithm code is made which will actually execute.

In block 96, for each code combination determined in block 94, a comparison is made to each compiled coded algorithm. The compilable coded algorithm is evaluated for the combination of input and variable specified.

In block 98, for each match obtained in block 96, a look-up table entry is added pointing to the appropriate compiled coded algorithm for the given input variable combination.

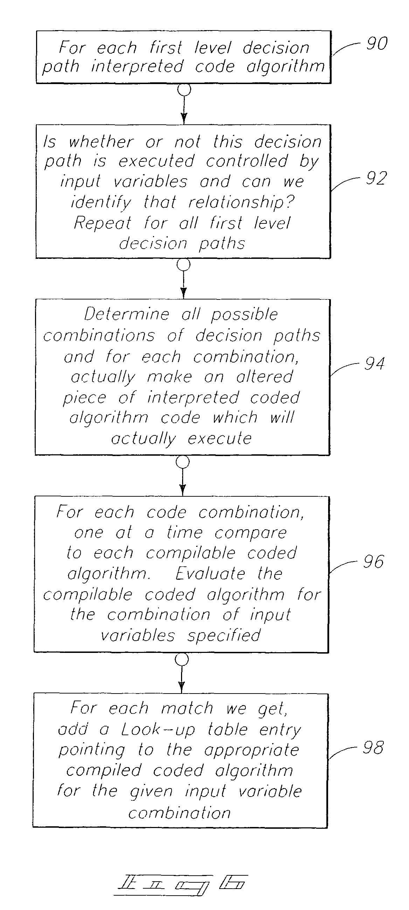

The above described method and apparatus can be employed in substantially any application where interpreted code is used. For example, Fig. 7 illustrates an example in a process control computer-aided design tool. In this design of an industrial controller, using a process control CAD tool, "point definition modules" 100 contain coded algorithms for simulation and system configuration. A point definition module is a module which contains control system information, such as physical interconnection information describing connections between hardware elements in a process control system. The coded algorithms can be interpreted as interpretable coded algorithms. The logic described above in connection with Figs. 2-6 can be used to create faster compiled coded algorithms which can be run if they are functionally equivalent to a given interpretable coded algorithm. If so, faster simulation and configuration would result.

Point information from one or more modules 100 is used in a process control CAD tool 110. A process control CAD tool is a computer aided design tool which is used by a control engineer to design a control system. In alternative embodiments, tools 110 used to design any other types of control system can be employed.

The CAD tool 110 shown in Fig. 7 is used for building control systems in a process control system. The CAD tool performs functions such as: visual representation; simulation; downloading a circuit to hardware; saving a configuration; and restoring a configuration.

A design is saved as a control system configuration 112. The saved control system configuration 112 is a control system configuration saved on a computer disk in file form. The CAD tool 110 can read or load a configuration from the saved configuration (e.g., file or files) 112.

Blocks 100, 110 and 112 are implemented in a common computer, such as a personal computer, in one embodiment.

Point information from the process control CAD tool 110 is downloaded to an industrial process control computer 114. An industrial process control computer is one that is specially designed for industrial process control. An industrial process control computer helps ensure that an industrial process will stay within specified parameters. The industrial process control computer 114 controls a physical process or processes 116, such as control of a heater, control of a tank, or any other industrial control.

The industrial process control computer 114 is a computer system that is specifically designed for an industrial process control application. This computer 114 is used to insure that an industrial process will stay within specified parameters.

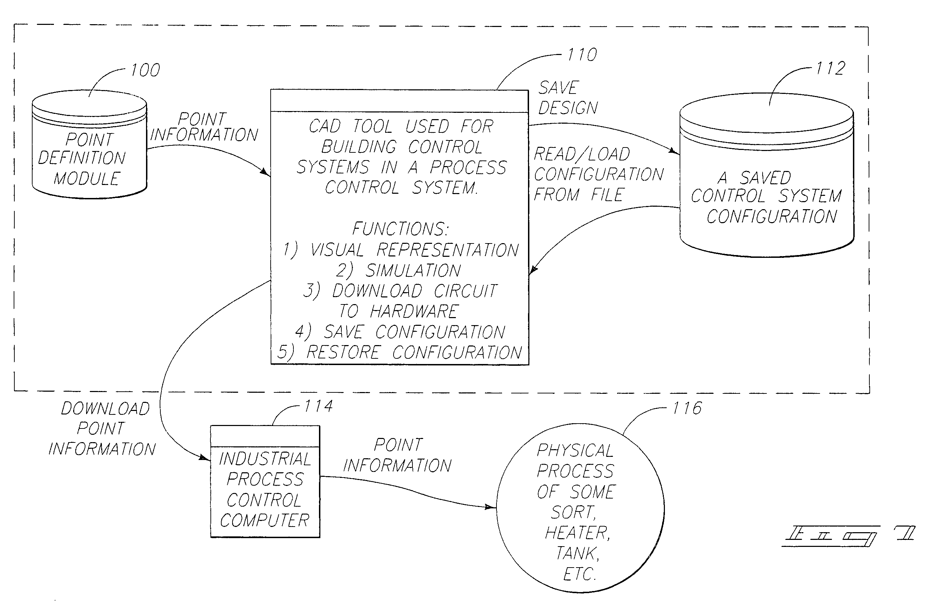

Fig. 8 is a functional block diagram illustrating a configurable analog module used with a design and simulation tool for designing a circuit which is to be implemented in a field programmable analog array, such as is available from Anadigm, Ltd., 3-5 Mallard Court, Mallard Way, Crewe Business Park, Crewe, United Kingdom, CW1 6QZ, (www. anadigm.com) or the tool as is described in detail in the above incorporated patent application Serial No. 10/171,334, filed June 11, 2002, titled "System and Method for Configuring Analog Elements in a Configurable Hardware Device", naming as inventors Danny Austin Bersch, Ian Craig Macbeth, Howard C. Anderson, Brian Eugene Nottingham, Troy Franklin Giles, and Timothy James Streit.

Information from one or more configurable analog modules 118 is used in a circuit design and simulation tool 120. More particularly, in the illustrated embodiment, the tool 120 is particularly designed for designing or building circuits to be uploaded into a field programmable analog array 124. However, in alternative embodiments, the tool 120 is used for designing or building any circuitry for any application. The tool 120 of the illustrated embodiment performs the following functions: provides a visual representation of circuitry; performs circuit simulation (and has an oscilloscope function), downloads a circuit to a chip 124 (e.g., a field programmable analog array or other programmable logic device), allows the circuit to be saved in a file 122, and allows the circuit to be restored or retrieved from a file 122. The configurable analog modules 118 are circuit building blocks (e.g., filters, amplifiers, comparators, etc.) abstracted to a functional level that can be manipulated in the design and simulation tool 120. For example, connections between circuit elements can be changed in a circuit layout or schematic view 242, parameters of circuit elements (e.g., filters or amplifiers) can be changed (e.g. gain can be adjusted, filter characteristics can be set, etc.), using dialog boxes or other input methods. Attention is directed to www.anadigm.com and to the above-incorporated patent application for a more detailed description of the modules and design tool.

Blocks 118, 120 and 122 are implemented in a common computer, such as a personal computer, in one embodiment.

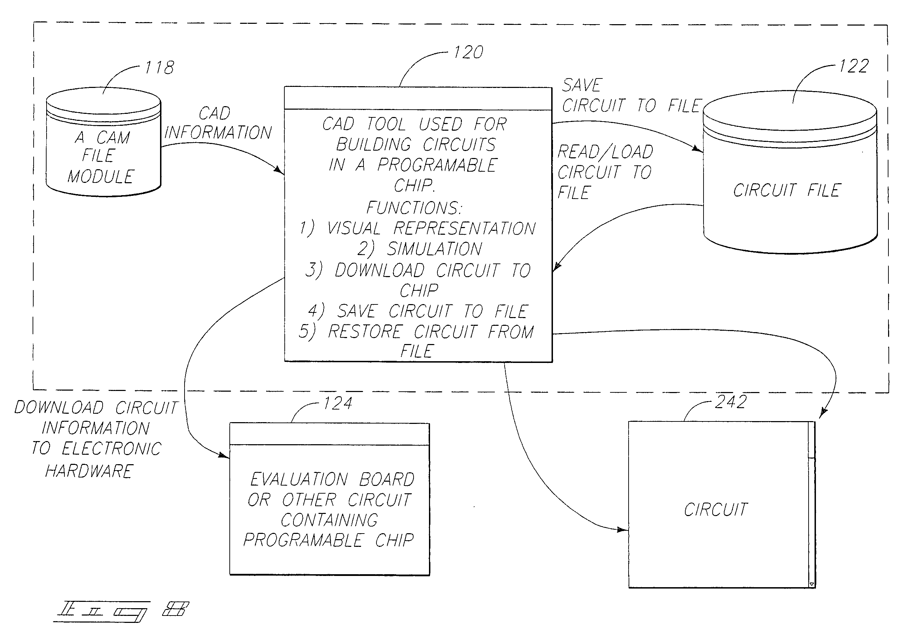

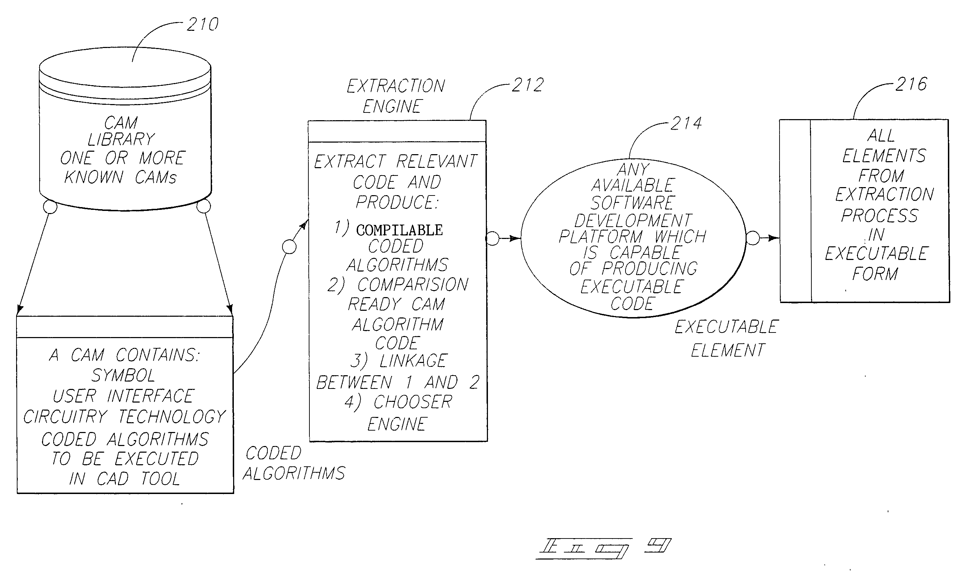

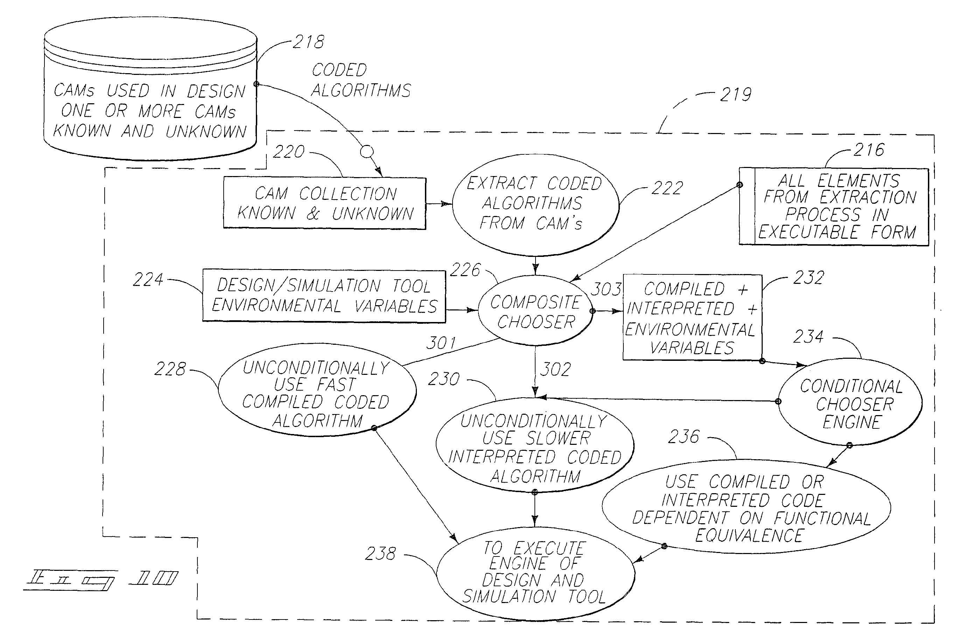

In a manner similar to that described above in connection with Fig. 1 and Fig. 2, Fig. 9 illustrates a process that occurs during a system build phase and Fig. 10 illustrates a process that occurs at run time. More particularly, Fig. 9 is a functional block diagram illustrating extracting and building of compilable code from a configurable analog module of the type shown in Fig. 8.

Fig. 9 shows one or more configurable analog modules 210 including interpretable code. More particularly, in the illustrated embodiment, the module 210 includes interpretable coded algorithms that may or may not interface or interact with other elements in the module. The configurable analog modules include circuit symbols, user interfaces (e.g., dialog boxes for setting parameters for circuit elements, such as gain), circuit topology, and a coded algorithm (e.g., pseudo code or code similar to a simplified version of C code or code of a known computer language) to be executed in a CAD tool 219. In one embodiment, additional formatting and interface information is added to the pseudo code of the CAM for use by an interpreter.

In one embodiment, the module 210 is an interchangeable component of a design tool available from Anadigm, Ltd., 3-5 Mallard Court, Mallard Way, Crewe Business Park, Crewe, United Kingdom, CW1 6QZ.

Coded algorithms from the module 210 (or from additional modules 210) are transferred to an extraction engine 212. The extraction engine 212 extracts relevant code and produces compilable coded algorithms, comparison ready configurable analog module algorithm code, a linkage between the compilable coded algorithms and comparison ready configurable analog module algorithm code, and a chooser engine (which will be described below in greater detail).

Compilable coded algorithms are interpretable coded algorithms that are capable of being translated into object code by a compiler of any kind (known or unknown). These compilable coded algorithms are "functionally equivalent" to the interpretable coded algorithms. The compilable coded algorithms may or may not require translation from the interpretable coded algorithm form to the compilable coded algorithm form. The compilable coded algorithms may or may not have "memory" or retained state information from execution to execution. Compilable coded algorithms are in comparison to compiled coded algorithms, which are compilable coded algorithms that have already been translated to object code by a compiler.

Creation of the compilable coded algorithms by the extraction engine 212 may involve translation of the code, and addition of interface information to interface to the compilable coded algorithms.

The comparison ready configurable analog module algorithm code is a translation of an interpretable coded algorithm into a data form that allows fast comparison of compilable coded algorithms and interpretable coded algorithms. The comparison ready configurable analog module algorithm code is defined by translating the module coded algorithms into a form where they can be efficiently and expediently compared for functional equivalence at run time.

The type of comparison that would be performed may include, but is not limited to, any of the following: checksums, a decision tree, a sorted list, hash tables (look-up tables), binary trees, etc.

The compilable coded algorithms, comparison ready algorithm code, a linkage between the compilable coded algorithms and comparison ready algorithm code, and chooser engine are used by a software development platform 214. The software development platform 214 is of any kind that can produce compiled code. The software development platform 214 produces executable code 216. In one embodiment, all elements from the extraction process become available in executable form.

The linkage between the compilable coded algorithms and the comparison ready algorithm code provides the ability to associate the results from the chooser engine with the correct set of compiled coded algorithms.

Fig. 10 is a functional block diagram illustrating runtime compare and chooser functions that take place after performing the functions of Fig. 9. Fig. 10 shows one or more modules 218. Each configurable analog module 218 contains coded algorithms that can be interpreted. The coded algorithms may or may not interface or interact with other elements of the module. A module collection 220 is selected from each module 218. The module collection 220 is different from the modules 210 (Fig. 9) because the modules in the execution may or may not be modules which were known at the time that the compilable coded algorithms were created. It is still possible at run time to find one or more compilable coded algorithms that are functionally equivalent to a given module coded algorithm which was unknown at the time that the compilable coded algorithms were constructed.

In block 222, interpretable coded algorithms are extracted from the modules 220 and/or 218. These are algorithms which may be written in any programming language that are contained within a configurable analog module. In one embodiment, these are written in the "C" programming language, or a subset thereof, but could be written in any programming language.

The extracted interpretable coded algorithms are made available to a composite chooser engine or chooser 226, so that the composite chooser engine 226 can use the interpretable coded algorithms along with all elements 216 from the extraction process to determine if a "functionally equivalent" compilable coded algorithm exists to match one or more of the module coded algorithms. The composite chooser engine 226 directs the functional comparison process and decides whether or not functional equivalence to design time module coded algorithms exist in the compiled coded algorithms of item 216. The comparison is either true or false all the time for a given compilable code algorithm and design configurable analog module set.

In block 226, the composite chooser engine makes a choice between paths 301, 302, and 303 (leading to blocks 228, 230, and 232, respectively) using logic substantially similar to that described above with regard to Fig. 3. The composite chooser engine 226 makes its choice based on the extracted coded algorithms 222, the executable elements 216, and design tool application environment variables and parameters 224. The application environment variables and parameters are the current, dynamic contents of various variables and parameters that are passed to the module coded algorithms or compilable coded algorithms. These are internal parameters related to a configurable analog module. These could include, for example, time, gain, mathematical information, clock phases, clock frequencies, circuit power consumption, gain bandwidth, comer frequency, hysteresis, module input values, etc.

If path 301 is selected by the chooser engine 226, the relatively faster, compiled coded algorithm is unconditionally used. This path is taken when, under all circumstances, a compilable coded algorithm has been found which is "functionally equivalent" to a given module coded algorithm. An identifier of the functionally equivalent compilable coded algorithm is sent to the execution engine 238. Because the functional equivalence is unconditional, the chooser engine 226 needs to only be called once for this module coded algorithm.

If path 302 is selected, a relatively slower, interpreted coded algorithm is used unconditionally in block 230. Path 302 is taken when, under all circumstances, a compilable coded algorithm cannot be identified which is "functionally equivalent" to a given module coded algorithm. An identifier indicating that the interpretable coded algorithm should be run is sent to the execution engine 238. Because "functionally equivalent" is never true, the chooser engine 226 need only be called once for this module coded algorithm.

If path 303 is selected, compiled and interpreted coded algorithms and application environment variables and parameters are handled by a conditional chooser engine 334. The conditional chooser engine 334 directs the functional comparison process and decides whether or not a functionally equivalent compiled compilable coded algorithm exists based on the compilable coded algorithm, design time module coded algorithm, and designer environment variables and parameters. Thus for a given compilable coded algorithm set and design CAM set, the comparison may be true or false depending on variable values as well as code.

Path 303 is taken when at least one compilable coded algorithm has been identified which is functionally equivalent to a given module coded algorithm, but that functional equivalence is dependent on which code paths and variables are accessed. The code paths and variables accessed, in turn, are dependent on the values of the application environment variables and parameters which may or may not be passed to the compilable coded algorithms and interpretable coded algorithms. Because this is conditional, for path 303 the chooser engine 226 must be called for each desired execution of the module coded algorithm, and the chooser engine 226 will indicate for each iteration whether to use the faster compiled coded algorithm or slower interpreted coded algorithm code in block 236. In one embodiment, the conditional chooser engine 234 is part of the composite chooser engine 226.

Paths 301, 302, and 303 all lead to an execution engine 238. An identifier for the compilable coded algorithm is returned from the chooser engine 226 through paths 301, 302 or 303. If no compilable coded algorithm is found to be functionally equivalent, then the compilable coded algorithm identifier returned is "NULL", and this indicates that an interpreted coded algorithm should be run for this module coded algorithm.

Reference numeral 219 refers to the design and simulation tool. This tool extracts algorithm code from each configurable analog module and uses elements 216 from the extraction process to determine the status of configurable analog module code relative to three alternative possibilities (associated with path 301, 302, and 303).

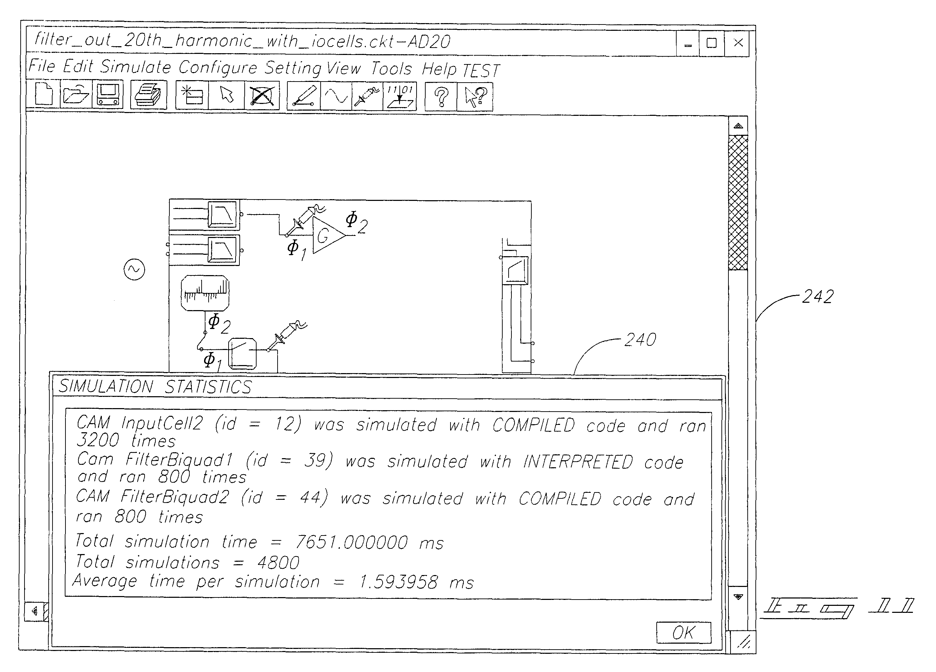

Fig. 11 is an example of a circuit design tool screen 242 showing a dialog box 240 indicating what code was interpreted and what code was compiled. In one embodiment, the design tool includes generates dialog boxes, such as the one shown, to indicate what code was interpreted and what code was compiled.

Additionally, in some cases, it will not be possible to use compiled code because of lack of functional equivalence. In these cases, another dialog box (other than the one shown) indicates that compiled code cannot be used and, in- one embodiment, indicates why compiled code cannot be used. Alternatively, this data can be included in the dialog box 240.

The disclosed method and apparatus can also be extended to any computer language for which a simulated version is used to facilitate faster and less costly initial development, but where a functionally equivalent (where functional equivalence is determined at run time) compiled version is run in place of the simulated version to provide for improved performance. These computer languages could include, but are not limited to, "C++", "Pascal", "Fortran", "Visual Basic."

Thus, a system and method have been described with provides a designer with the flexibility of being able to change coded algorithms (e.g., change coded algorithms in a design tool) without the supplier of the design tool having to rebuild or reconstruct the design tool. The designer has the advantage of fast, compiled code where functional equivalence exists relative to existing compiled code. If there is no functionally equivalent compiled code, the designer's code can still be interpreted. The designer can also change coded algorithms without incurring the expense or overhead of a software development environment (i.e., the designer does not need to purchase a compiler).

In compliance with the statute, the invention has been described in language more or less specific as to structural and methodical features. It is to be understood, however, that the invention is not limited to the specific features shown and described, since the means herein disclosed comprise preferred forms of putting the invention into effect. The invention is, therefore, claimed in any of its forms or modifications within the proper scope of the appended claims appropriately interpreted in accordance with the doctrine of equivalents.

**Claims**

1.  A method comprising:

    providing at least one module containing a plurality of interpretable coded algorithms;

producing compilable coded algorithms from the interpretable coded algorithms;

producing comparison ready algorithm code from the interpretable coded algorithms, the comparison ready algorithm code providing for comparison of compilable coded algorithms to interpretable coded algorithms;

producing a chooser engine configured to functionally compare interpretable coded algorithms to compilable coded algorithms;

producing a linkage between the compilable coded algorithms and the comparison ready algorithm code to associate the results of the functional comparison with compiled coded algorithms; and

producing compiled coded algorithms from the compilable coded algorithms.

2. A method in accordance with claim 1 and further comprising producing executable code from the comparison ready algorithm code.

3. A method in accordance with claim 1 and further comprising producing executable code from the linkage between the compilable coded algorithms and the comparison ready algorithm code.

4. A method in accordance with claim 1 and further comprising producing executable code from the chooser engine, to define an executable form of the chooser engine.

5. A method comprising:

providing an interpretable coded algorithm;

providing an executable coded algorithm;

determining whether the interpretable coded algorithm is functionally equivalent to the executable coded algorithm; and

selectively performing one of interpreting the interpretable coded algorithm and executing the executable coded algorithm.

6. A method in accordance with claim 5 and further comprising unconditionally using the executable coded algorithm if the interpretable coded algorithm is, under all circumstances, functionally equivalent to the executable coded algorithm.

7. A method in accordance with claim 5 and further comprising unconditionally interpreting the interpretable coded algorithm if the interpretable coded algorithm is never functionally equivalent to the executable coded algorithm.

8. A method in accordance with claim 6 and further comprising unconditionally interpreting the interpretable coded algorithm if the interpretable coded algorithm is never functionally equivalent to the executable coded algorithm.

9. A method in accordance with claim 5 and further comprising determining whether the interpretable coded algorithm is sometimes functionally equivalent to the executable coded algorithm depending on which code paths and variables are accessed and, if so, interpreting the interpretable code if the interpretable coded algorithm is not functionally equivalent to the executable coded algorithm for specific code paths and variables accessed for a specific execution.

10. A method in accordance with claim 5 and further comprising determining whether the interpretable coded algorithm is sometimes functionally equivalent to the executable coded algorithm depending on which code paths and variables are accessed and, if so, using the executable code if the interpretable coded algorithm is functionally equivalent to the executable coded algorithm for specific code paths and variables accessed for a specific execution.

11. A method in accordance with claim 8 and further comprising determining whether the interpretable coded algorithm is sometimes functionally equivalent to the executable coded algorithm depending on which code paths and variables are accessed and, if so, interpreting the interpretable code if the interpretable coded algorithm is not functionally equivalent to the executable coded algorithm for specific code paths and variables accessed for a specific execution.

12. A method in accordance with claim 8 and further comprising determining whether the interpretable coded algorithm is sometimes functionally equivalent to the executable coded algorithm depending on which code paths and variables are accessed and, if so, using the executable code if the interpretable coded algorithm is functionally equivalent to the executable coded algorithm for specific code paths and variables accessed for a specific execution.

**13.** A method in accordance with claim 5 and comprising providing a plurality of executable coded algorithms, and determining whether the interpretable coded algorithm is functionally equivalent to any of the executable coded algorithms.

**14.** A method comprising:

providing an interpretable coded algorithm;
providing a plurality of executable coded algorithms;
determining, in a computer aided design tool for designing an industrial control process, whether the interpretable coded algorithm is functionally equivalent to the executable coded algorithm;
unconditionally using the executable coded algorithm if the interpretable coded algorithm is, under all circumstances, functionally equivalent to the executable coded algorithm; and
unconditionally interpreting the interpretable coded algorithm if the interpretable coded algorithm is never functionally equivalent to the executable coded algorithm.

**15.** A method in accordance with claim 14 and further comprising determining whether the interpretable coded algorithm is sometimes functionally equivalent to the executable coded algorithm depending on which code paths and variables are accessed and, if so, interpreting the interpretable code if the interpretable coded algorithm is not functionally equivalent to the executable coded algorithm for specific code paths and variables accessed for a specific execution.

**16.** A method in accordance with claim 15 and further comprising determining whether the interpretable coded algorithm is sometimes functionally equivalent to any of the executable coded algorithms depending on which code paths and variables are accessed and, if so, using the executable code if the interpretable coded algorithm is functionally equivalent to one of the executable coded algorithms for specific code paths and variables accessed for a specific execution.

**17.** A method comprising:

providing an interpretable coded algorithm;
providing a plurality of executable coded algorithms;
determining, in a computer aided design tool for designing electrical circuits, whether the interpretable coded algorithm is functionally equivalent to the executable coded algorithm;
unconditionally using the executable coded algorithm if the interpretable coded algorithm is, under all circumstances, functionally equivalent to the executable coded algorithm; and
unconditionally interpreting the interpretable coded algorithm if the interpretable coded algorithm is never functionally equivalent to the executable coded algorithm.

**18.** A method in accordance with claim 17 and further comprising determining whether the interpretable coded algorithm is sometimes functionally equivalent to the executable coded algorithm depending on which code paths and variables are accessed and, if so, interpreting the interpretable code if the interpretable coded algorithm is not functionally equivalent to the executable coded algorithm for specific code paths and variables accessed for a specific execution.

**19.** A method in accordance with claim 18 and further comprising determining whether the interpretable coded algorithm is sometimes functionally equivalent to any of the executable coded algorithms depending on which code paths and variables are accessed and, if so, using the executable code if the interpretable coded algorithm is functionally equivalent to one of the executable coded algorithms for specific code paths and variables accessed for a specific execution.

**20.** A method in accordance with claim 19 and further comprising uploading a circuit design to a field programmable analog array from the computer aided design tool.

**21.** A system comprising:

at least one module containing a plurality of interpretable coded algorithms;
means for producing compilable coded algorithms from the interpretable coded algorithms;
means for producing comparison ready algorithm code from the interpretable coded algorithms, the comparison ready algorithm code providing for comparison of compilable coded algorithms to interpretable coded algorithms;

a chooser engine configured to functionally compare interpretable coded algorithms to compilable coded algorithms;

means for producing a linkage between the compilable coded algorithms and the comparison ready algorithm code to associate the results of the functional comparison with compiled coded algorithms; and

means for producing compiled coded algorithms from the compilable coded algorithms.

22. A system in accordance with claim 21 and further comprising means for producing executable code from the comparison ready algorithm code.

23. A system in accordance with claim 21 and further comprising means for producing executable code from the linkage between the compilable coded algorithms and the comparison ready algorithm code.

24. A system in accordance with claim 21 and further comprising means for producing executable code from the chooser engine, to define an executable form of the chooser engine.

25. A system comprising:

an interpretable coded algorithm;

providing an executable coded algorithm;

determining whether the interpretable coded algorithm is functionally equivalent to the executable coded algorithm; and

selectively performing one of interpreting the interpretable coded algorithm and executing the executable coded algorithm.

26. A system in accordance with claim 25 and further comprising means for unconditionally using the executable coded algorithm if the interpretable coded algorithm is, under all circumstances, functionally equivalent to the executable coded algorithm.

27. A system in accordance with claim 25 and further comprising means for unconditionally interpreting the interpretable coded algorithm if the interpretable coded algorithm is never functionally equivalent to the executable coded algorithm.

28. A system in accordance with claim 26 and further comprising means for unconditionally interpreting the interpretable coded algorithm if the interpretable coded algorithm is never functionally equivalent to the executable coded algorithm.

29. A system in accordance with claim 25 and further comprising means for determining whether the interpretable coded algorithm is sometimes functionally equivalent to the executable coded algorithm depending on which code paths and variables are accessed and, if so, interpreting the interpretable code if the interpretable coded algorithm is not functionally equivalent to the executable coded algorithm for specific code paths and variables accessed for a specific execution.

30. A system in accordance with claim 25 and further comprising means for determining whether the interpretable coded algorithm is sometimes functionally equivalent to the executable coded algorithm depending on which code paths and variables are accessed and, if so, using the executable code if the interpretable coded algorithm is functionally equivalent to the executable coded algorithm for specific code paths and variables accessed for a specific execution.

31. A system in accordance with claim 28 and further comprising means for determining whether the interpretable coded algorithm is sometimes functionally equivalent to the executable coded algorithm depending on which code paths and variables are accessed and, if so, interpreting the interpretable code if the interpretable coded algorithm is not functionally equivalent to the executable coded algorithm for specific code paths and variables accessed for a specific execution.

32. A system in accordance with claim 28 and further comprising means for determining whether the interpretable coded algorithm is sometimes functionally equivalent to the executable coded algorithm depending on which code paths and variables are accessed and, if so, using the executable code if the interpretable coded algorithm is functionally equivalent to the executable coded algorithm for specific code paths and variables accessed for a specific execution.

**33.** A system in accordance with claim 25 and comprising means for providing a plurality of executable coded algorithms, and determining whether the interpretable coded algorithm is functionally equivalent to any of the executable coded algorithms.

**34.** A system comprising:

an interpretable coded algorithm;
a plurality of executable coded algorithms;
a computer aided design tool for designing an industrial control process and configured to:

determine whether the interpretable coded algorithm is functionally equivalent to the executable coded algorithm;
unconditionally use the executable coded algorithm if the interpretable coded algorithm is, under all circumstances, functionally equivalent to the executable coded algorithm; and
unconditionally interpret the interpretable coded algorithm if the interpretable coded algorithm is never functionally equivalent to the executable coded algorithm.

**35.** A system in accordance with claim 34 wherein the computer aided design tool is further configured to determine whether the interpretable coded algorithm is sometimes functionally equivalent to the executable coded algorithm depending on which code paths and variables are accessed and, if so, interpret the interpretable code if the interpretable coded algorithm is not functionally equivalent to the executable coded algorithm for specific code paths and variables accessed for a specific execution.

**36.** A system in accordance with claim 35 wherein the computer aided design tool is further comprising determining whether the interpretable coded algorithm is sometimes functionally equivalent to any of the executable coded algorithms depending on which code paths and variables are accessed and, if so, use the executable code if the interpretable coded algorithm is functionally equivalent to one of the executable coded algorithms for specific code paths and variables accessed for a specific execution.

**37.** A system comprising:

an interpretable coded algorithm;
a plurality of executable coded algorithms;
a computer aided design tool for designing electrical circuits and configured to:

determine whether the interpretable coded algorithm is functionally equivalent to the executable coded algorithm;
unconditionally use the executable coded algorithm if the interpretable coded algorithm is, under all circumstances, functionally equivalent to the executable coded algorithm; and
unconditionally interpret the interpretable coded algorithm if the interpretable coded algorithm is never functionally equivalent to the executable coded algorithm.

**38.** A system in accordance with claim 37 wherein the computer aided design tool is further configured to determine whether the interpretable coded algorithm is sometimes functionally equivalent to the executable coded algorithm depending on which code paths and variables are accessed and, if so, interpret the interpretable code if the interpretable coded algorithm is not functionally equivalent to the executable coded algorithm for specific code paths and variables accessed for a specific execution.

**39.** A system in accordance with claim 38 wherein the computer aided design tool is further configured to determine whether the interpretable coded algorithm is sometimes functionally equivalent to any of the executable coded algorithms depending on which code paths and variables are accessed and, if so, use the executable code if the interpretable coded algorithm is functionally equivalent to one of the executable coded algorithms for specific code paths and variables accessed for a specific execution.

**40.** A system in accordance with claim 39 wherein the computer aided design tool is further configured to upload a circuit design to a field programmable analog array from the computer aided design tool.

ANY KNOWN MODULE(S) WHICH CONTAINS INTERPRETABLE CODED ALGORITHMS WHICH MAY OR MAY NOT INTERFACE/ INTERACT WITH OTHER ELEMENTS OF THE MODULE(S) — 10

CODED ALGORITHMS FROM ONE OR MORE MODULES

AN EXTRACTION ENGINE WHICH DOES THE FOLLOWING: — 12

EXTRACT RELEVANT CODE AND PRODUCE:
1) COMPILABLE CODED ALGORITHMS
2) COMPARISON READY ALGORITHM CODE
3) LINKAGE BETWEEN 1 AND 2
4) CHOOSER ENGINE

ALL ITEMS IN RED FROM EXTRACTION ENGINE

SOFTWARE DEVELOPMENT PLATFORM OF ANY KIND WHICH CAN PRODUCE COMPILED CODE — 14

EXECUTABLE CODE

ALL ELEMENTS FROM EXTRACTION PROCESS IN EXECUTABLE FORM — 16

FIG. 1

18

ANY KNOWN OR UNKNOWN MODULE(S) WHICH CONTAINS CODED ALGORITHMS THAT CAN BE INTERPRETED AND MAY OR MAY NOT INTERFACE/INTERACT WITH OTHER ELEMENTS OF THE MODULE(S)

20

MODULE COLLECTION KNOWN & UNKNOWN

22

EXTRACT CODED ALGORITHMS FROM MODULES

32

COMPILED + INTERPRETED + APPLICATION ENVIRONMENT VARIABLES, PARAMETERS

24

APPLICATION ENVIRONMENT VARIABLES, PARAMETERS

COMPOSITE CHOOSER ENGINE

3

1

2

26

34

CONDITIONAL CHOOSER ENGINE

16

ALL ELEMENTS FROM EXTRACTION PROCESS IN EXECUTABLE FORM

28

UNCONDITIONALLY USE FAST COMPILED CODED ALGORITHM

30

UNCONDITIONALLY USE SLOWER INTERPRETED CODED ALGORITHM

36

USE COMPILED OR INTERPRETED DEPENDENT ON FUNCTIONAL EQUIVALENCE

1

2

3

38

TO EXECUTION ENGINE OF SOFTWARE APPLICATION

Fig 2

Fig 3

| FIG 3A |
| FIG 3B |
| FIG 3C |

Application environment variables, parameters — 24

Application environment variables, parameters

Coded algorithms extracted from module, a.k.a. interpreted coded algorithms, one at a time  — 42

All elements from extraction process  — 16

24

44

Have the Coded algorithms been previously determined to have a conditionally functionally equivalent compilable coded algorithm available?

Take path 3, passing all input data to Conditional Chooser Engine

YES

NO

C

To Conditional Chooser — 46

flowchart

FIG 3A

EP 1 394 677 A2

C NO

Take path 1, and an identifier for the compilable coded algorithm to execute. No need to call chooser again since the interpreted coded algorithm is always equivalent to at least one compilable coded algorithm

A

48

Is the interpreted coded algorithm syntactically identical, with the exception of white space and comments, to one or more compilable coded algorithms?

YES

50

Path 1, return identifier for the first compilable coded algorithm which unconditionally matches

NO

52

Does this interpreted coded algorithm differ from at least one compilable coded algorithm only in 1) the addition of variables which are never accessed or read, or 2) a change only of name for one or more existing variables in every place each variable is accessed or both 1 and 2

YES

A

D

FIG 3 B

D

NO

54

Does interpreted coded algorithm differ from one or more compilable coded algorithms only in decisions path code, a.k.a. conditional code which is added to the module coded algorithm?

58

Path 2, no compilable coded algorithm found which matches moule coded algorithm. No need to call chooser again since no matching compilable coded algorithm is available. interpreted coded algorithm will always be run for this module coded algorithm.

Return NULL compilable coded algorithm

NO

Take path 3, passing all input data to Conditional Chooser Engine

YES

56

To Conditional Chooser Engine

FIG 3C

EP 1 394 677 A2

FIG. 4

- **Application environment variables, parameters** — 24
- **Coded algorithms extracted from module, a.k.a. interpreted coded algorithms, one at a time** — 42
- **All elements from extracted process** — 16

**60** Was a conditional decision data structure (hash table or other decision data structure) already built for this interpreted coded algorithm?

NO → **64** Build conditional decision data structure (hash table or other decision data structure) for this interpreted coded algorithm

YES → **62** Determine if there is a matching compilable coded algorithm for this combination of variables

**68** No compilable coded algorithm match, run interpreted coded algorithm for this pass

**66** Were any matching compilable coded algorithms found for this interpreted coded algorithm?

(B)

**70** Compilable coded algorithm match found, return compilable coded algorithm identifier of compilable coded algorithm to execute

**72** No compilable coded algorithm match, unconditionally Use slower interpreted coded algorithm (path 2)

EP 1 394 677 A2

*FIG 5*

```
                    ┌──────────┐
                    │  START   │
                    └──────────┘
                          │
                          ▼
              74      ◇ Are CAM code
                      and Compiled Code      YES ──────►┌────────────────────────┐
                      syntactically                     │ Use faster pre-compiled │  76
                      identical? ◇                       │  code rather than      │
                          │ NO                           │ interpreted module code │
                          ▼                              │  since compiled code    │
              78      ◇ Only comments or                 │  is functionally        │
                      white space         YES ──────────►│  equivalent             │
                      change? ◇                          └────────────────────────┘
                          │ NO
                          ▼
              80      ◇ Is new code "dead"
                      code? I.e. never       YES–
                      executed? ◇            Dead Code
                          │ NO
                          ▼
              82      ◇ If only Variable
                      definitions were         None of the added variables
                      added, are these         (includes Lookup Table)
                      variables ever           are ever accessed for read
                      referenced for
                      read access? ◇
                          │ YES– Added Variables are
                          │ accessed for read
                          ▼                      No– Dead Code for
              84      ◇ Can the current           the Parameter set
                      input parameter set         Specified
                      ever cause the new
                      code to be executed? ◇
                          │ NO                         ┌────────────────────────┐  88
                          ▼                            │ Pre-Compiled Code is    │
              86  ┌──────────────────┐                 │ not functionally        │
                  │  Other checks    │ ───────────────►│ equivalent to Module    │
                  └──────────────────┘                 │ code: Execute slower    │
                                                       │ interpreted version.    │
                                                       └────────────────────────┘
```

For each first level decision
path interpreted code algorithm — 90

Is whether or not this decision
path is executed controlled by
input variables and can we
identify that relationship?
Repeat for all first level
decision paths — 92

Determine all possible
combinations of decision paths
and for each combination,
actually make an altered
piece of interpreted coded
algorithm code which will
actually execute — 94

For each code combination,
one at a time compare
to each compilable coded
algorithm.  Evaluate the
compilable coded algorithm for
the combination of input
variables specified — 96

For each match we get,
add a Look-up table entry
pointing to the appropriate
compiled coded algorithm
for the given input variable
combination — 98

*100* POINT DEFINITION MODULE

POINT INFORMATION

*110* CAD TOOL USED FOR BUILDING CONTROL SYSTEMS IN A PROCESS CONTROL SYSTEM.

FUNCTIONS:
1) VISUAL REPRESENTATION
2) SIMULATION
3) DOWNLOAD CIRCUIT TO HARDWARE
4) SAVE CONFIGURATION
5) RESTORE CONFIGURATION

SAVE DESIGN

READ/LOAD CONFIGURATION FROM FILE

*112* A SAVED CONTROL SYSTEM CONFIGURATION

DOWNLOAD POINT INFORMATION

*114* INDUSTRIAL PROCESS CONTROL COMPUTER

POINT INFORMATION

*116* PHYSICAL PROCESS OF SOME SORT, HEATER, TANK, ETC.

FIG 7

EP 1 394 677 A2

FIG. 8

*Fig 9*

CAM
LIBRARY
ONE OR MORE
KNOWN CAMs

— 210

A CAM CONTAINS:
SYMBOL
USER INTERFACE
CIRCUITRY TECHNOLOGY
CODED ALGORITHMS
TO BE EXECUTED
IN CAD TOOL

CODED
ALGORITHMS

EXTRACTION
ENGINE — 212

EXTRACT RELEVANT
CODE AND
PRODUCE:
1) COMPILABLE
CODED
ALGORITHMS
2) COMPARISION
READY CAM
ALGORITHM
CODE
3) LINKAGE
BETWEEN 1 AND 2
4) CHOOSER
ENGINE

— 214

ANY
AVAILABLE
SOFTWARE
DEVELOPMENT
PLATFORM WHICH
IS CAPABLE
OF PRODUCING
EXECUTABLE
CODE

EXECUTABLE
ELEMENT

— 216

ALL
ELEMENTS
FROM
EXTRACTION
PROCESS
IN
EXECUTABLE
FORM

EP 1 394 677 A2

CAMs USED IN DESIGN
ONE OR MORE CAMs
KNOWN AND UNKNOWN

218

CODED
ALGORITHMS

219

216

ALL ELEMENTS
FROM EXTRACTION
PROCESS IN
EXECUTABLE FORM

220

CAM COLLECTION
KNOWN & UNKNOWN

EXTRACT CODED
ALGORITHMS
FROM CAM's

222

224

DESIGN/SIMULATION TOOL
ENVIRONMENTAL VARIABLES

226

COMPOSITE
CHOOSER

303

COMPILED +
INTERPRETED +
ENVIRONMENTAL
VARIABLES

232

234

301

302

CONDITIONAL
CHOOSER
ENGINE

228

UNCONDITIONALLY
USE FAST
COMPILED CODED
ALGORITHM

230

UNCONDITIONALLY
USE SLOWER
INTERPRETED CODED
ALGORITHM

236

USE COMPILED OR
INTERPRETED CODE
DEPENDENT ON FUNCTIONAL
EQUIVALENCE

238

TO EXECUTE
ENGINE OF
DESIGN AND
SIMULATION TOOL

FIG. 10

EP 1 394 677 A2

filter_out_20th_harmonic_with_iocells.ckt−AD20

File Edit Simulate Configure Setting View Tools Help TEST

$\phi_2$

$\phi_1$

$G$

$\phi_2$

$\phi_1$

242

240

SIMULATION STATISTICS

CAM InputCell2 (id = 12) was simulated with COMPILED code and ran 3200 times

Cam FilterBiquad1 (id = 39) was simulated with INTERPRETED code and ran 800 times

CAM FilterBiquad2 (id = 44) was simulated with COMPILED code and ran 800 times

Total simulation time = 7651.000000 ms

Total simulations = 4800

Average time per simulation = 1.593958 ms

OK

FIG. 11